# EUROPEAN PATENT APPLICATION

(11) **EP 2 109 225 A1**
(43) Date of publication of application: **14.10.2009**
(21) Application number: 08154275.5
(22) Date of filing: 09.04.2008
(51) Int. Cl.: H04B 1/38

(54) **Transmission device**

(71) Applicant: Tidewell Ltd., Wokingham, Berkshire RG40 5SL (GB)
(72) Inventor: Darby, Andrew, Ascot, Warwickshire SL5 8PH (GB); Webster, Tim, Rugby, Warwickshire CV23 0WP (GB)
(74) Representative: Wilding, Frances Ward

(57) **Abstract**

A device for transmitting a sound signal received from a source to an in-vehicle audio system, the device comprising sound input circuitry operable to receive a sound signal, control circuitry operable to convert the sound signal to a signal for transmission and two transmitters both operable to transmit the signal for transmission to the in-vehicle audio system in a radio transmission channel. The control circuitry is also operable to change radio transmission channel by performing a frequency handover including changing from transmitting the signal for transmission from a first transmitter in a current channel to transmitting the signal for transmission from a second transmitter in a new channel.

## Description

The present invention relates to a device and method for transmitting a radio signal to an in-vehicle audio system.

The invention has many applications in providing in-vehicle audio entertainment and information. In one application, a driver or passenger in a car may wish to use the in-vehicle audio system to listen at an easily audible volume to sound output from a much quieter device. For example, somebody travelling in a car may wish to listen to a personal music playback apparatus such as an MP3 player, which is conventionally used with earphones or headphones, at a volume which is also audible to others travelling in the car. Or, a lone driver may prefer to listen to the music stored on personal music playback apparatus rather than listen to the radio. To do so using earphones or headphones may cause discomfort and present a safety hazard when driving.

Another application is in replacing stand-alone hands-free devices when using a mobile telephone in a vehicle. Normal use of a telephone handset whilst driving is banned in many places, including the UK, France, Germany, Japan, and certain States of the USA. This has increased the need for, and popularity of, so-called hands-free devices. Stand-alone hands-free devices provide a speaker and/or microphone remote from the handset and enable the user to conduct a telephone call with little or no direct use of the telephone handset. In fact, telephone handsets are able to receive and transmit a good-quality speech signal even if the user is not talking directly into the microphone, such as when a user in a car is not holding the handset against their ear. However, it can be very difficult for the user to hear the output of the handset's speaker unless it is held very close to the ear. Some telephone handsets are equipped with loudspeaker functionality, but even this is often insufficient to be heard above background noise present in a vehicle, such as engine noise. Although stand-alone hands-free devices can be equipped with their own amplifier and speakers to solve this problem, these are often low in sound quality, and hard for the user to hear over background noise. Therefore, it is desirable to improve the audibility of sound output from the speaker of the telephone handset.

Many telephone handsets are equipped with a Bluetooth transmitter to transmit an output sound signal according to the Bluetooth specifications. It may be desirable for a user to relay this output sound signal to the in-vehicle audio system as a way of hearing a call at a louder volume.

Another application is in Digital Audio Broadcasting (also known as DAB or Eureka-147).

The introduction of DAB has led to an increase in the number of broadcasting radio stations. Some radio stations are only available on DAB. In-car audio systems with DAB tuners are not widespread. A car traveller may have a personal DAB radio (or other radio with stations not available using the in-car audio system), which normally outputs sound via earphones or headphones, that they would like to hear at a louder volume via the in-vehicle audio system.

The skilled reader will appreciate that all these applications are equally viable in vehicles other than cars, such as lorries, vans, boats and any vehicle with a built in audio system.

In the UK, the Wireless Telegraphy Exemption Amendment Regulations 2006 (Statutory Instrument 2006 no. 2994) made provisions for "micro" transmitters to facilitate easy connection between audio sources and normal FM broadcast receivers. These regulations came into force on 8 December 2006, up until when it had been illegal to transmit any radio signal in the FM broadcast band without first obtaining a licence from OFCOM (Office of Communications). The new regulations allow devices satisfying the UK Interface Requirement 2030 to broadcast in the FM band over a short range without licence.

In the uses described above, or in any other case where it is desirable to transmit a sound source to the in-vehicle audio system, the output from a sound source may be transmitted using a device including an FM radio transmitter. Some such devices are already available, but suffer from disadvantages.

European patent publication EP0920170A2 discloses a hands-free adapter for interfacing a mobile phone handset with an existing audio system. The adapter uses a manual tuner to select the transmission frequency on which to transmit the sound output from the handset. This has the drawback that the selected transmission frequency may suffer from significant levels of background noise, and it may be time-consuming or frustrating for the user to search through the frequency band for a quiet channel. If the user is operating the adapter while driving, then having to search in this way may also be a safety hazard as it would reduce concentration on the road. Furthermore, if the user drives a long way while the transmission (call) is in progress, then other external radio transmitters will come in and out of range, and a previously quiet channel may become noisy.

International patent publication WO 2007/076183 A2 discloses a modulator module that uses a radio receiver to search the relevant broadcast band for unoccupied regions of the radio spectrum (holes) between broadcast bands. The locations of these holes are then stored, and the centre frequency of one is selected to use to deliver audio to the car radio. The centre frequency of the selected hole is sent to the car radio over a control bus, and the car radio is then instructed to tune to the selected frequency. This arrangement suffers from the disadvantage that a physical wired connection to the vehicle must be made, for example via the OBD II connector. This is likely to cause inconvenience to the user in terms of the time required for setup. Moreover, having cables connecting devices in the vehicle can cause entanglement which can be a distraction to the driver. Furthermore, the protocol used for instructing the car radio in this way varies between manufacturers, hence compatibility of the device may be reduced.

International patent publication WO 2006/106379 A1 discloses a method and device for transmitting audio data to an RDS-capable radio receiver which uses the Alternative Frequency (AF) function of the RDS to switch between frequencies. This suffers from the disadvantage that the AF information may prompt the radio receiver (such as the in-car audio system) to change frequency even though the transmitter continues to transmit on the old frequency, thus interrupting the transmission. Furthermore, the configuration of components disclosed necessitates interrupting the transmission to scan for available frequencies.

It is desirable to provide a device and method that overcome, or at least mitigate one or more of the disadvantages mentioned above.

The invention is defined in the independent claims, to which reference should now be made. Advantageous embodiments are set out in the sub claims.

An exemplary embodiment of the invention is a device for transmitting a sound signal received from a source to an in-vehicle audio system comprising: sound input circuitry operable to receive a sound signal; control circuitry operable to convert the sound signal to a signal for transmission; and two transmitters both operable to transmit the signal for transmission as a radio signal to the in-vehicle audio system in a radio transmission channel; wherein the control circuitry is also operable to change radio transmission channel by performing a frequency handover including changing from transmitting the radio signal from a first transmitter in a current channel to transmitting the radio signal from a second transmitter in a new channel.

Provision of the two transmitters for channel changes allows the device to change between transmission channels, perhaps due to changes in the local broadcast environment as the vehicle travels between locations, in a manner that can be seamless to the user.

The device may perform the frequency handover in a number of ways. The transmission from the first transmitter could come to an abrupt halt, to be replaced by the transmission from the second transmitter in the new channel. Or they may be some temporal overlap of the two transmissions. Advantageously, the frequency handover includes a dual-transmission phase in which the first transmitter transmits the radio signal in the current channel whilst the second transmitter simultaneously transmits the radio signal in the new channel. Transmitting the radio signal in both the current and new channels simultaneously helps the frequency handover to be seamless from a user's point of view.

During the dual transmission phase, the control circuitry may vary the transmission parameters of transmissions from either or both transmitters. Transmission parameters could be increased or decreased in a number of ways, including a stepwise fashion, or smoothly ramped up or down. For example, during the dual transmission phase of the frequency handover, a transmission parameter of the transmission from the first transmitter may be gradually reduced and/or a transmission parameter of the transmission from the second transmitter may be gradually increased. In an exemplary embodiment of the present invention, a transmission parameter of the transmission from the first transmitter is gradually reduced whilst a transmission parameter of the transmission with the second transmitter is gradually increased.

Preferably, during the dual transmission phase, the transmission parameter reduction and increase are at the same rate so that the frequency handover mimics the effect of the vehicle's movement away from one transmitter external to the vehicle towards another transmitter external to the vehicle. As a vehicle moves away from an external transmitter, the signal received by the in-vehicle audio system from that transmitter will worsen. It is likely that the vehicle will be moving toward another external transmitter, transmitting the same program but possibly on a different frequency. The signal that could be received from this transmitter will probably be improving. Therefore, the internal logic of in-vehicle audio systems is designed to be compatible with transmission parameters varying in this way, and hence there is less likelihood of the frequency handover causing confusion to the system. Problems such as long interruptions to the output from the in-vehicle audio system, or failing to swap to the new frequency, can be avoided and the handover remain seamless to the user.

In another embodiment of the present invention the control circuitry is operable to include in the frequency handover an initial transmitter swap in which existing transmission of the radio signal by the second transmitter in the current channel is disabled and swapped transmission by the first transmitter in the current channel is enabled. This initial swap ensures that the role of each transmitter is maintained in subsequent frequency handovers. Consequently, the hardware and software design requirements for each transmitter can be simplified. It is desirable to perform this initial transmitter swap in such a way that the change in transmitter is not detected by the in-vehicle audio system. Preferably, the existing transmission and swapped transmission are of the same radio signal with unaltered transmission parameters.

During dual transmission, the control circuitry may alter transmission parameters of the signal for transmission and of the resulting radio signal. In exemplary embodiments, the transmission parameter to be altered by the control circuitry may be either the transmit power or it may be the pilot tone strength.

Frequency handover could be user-triggered or automatic, for example dependent on relative noise levels in different channels. In an exemplary embodiment the device further comprises a radio receiver wherein the control circuitry is operable to change radio transmission channel based on the noise detected by the receiver in each transmission channel. It is also desirable to monitor the noise level in the current transmission channel and in all other channels using a radio receiver. The control circuitry is thereby able to build up, and maintain, a quantitative picture of noise levels across the entire frequency band. Alternatively, the in-vehicle audio may carry out the noise detection and send the results, or even a suggested channel, to the device.

The local broadcast environment is likely to change as the vehicle moves distances to external transmitters changes. Therefore, it is desirable for the control circuitry to periodically update the stored value of the noise detected in the current channel. This could be of use to the control circuitry when performing comparisons of noise levels between channels to decide whether or not to change transmission channel.

In an embodiment of the present invention the control circuitry is operable to periodically and temporarily suspend the transmission by the device and to detect noise in a current channel during the suspension. Desirably the suspension will be short enough in duration to go unnoticed by the user.

It is desirable to identify any channels which could be used for transmission of the radio signal. A scan of the frequency band could be made to look for any channels in which the noise detected is below a certain threshold value. In a device embodying the present invention the control circuitry is operable to control a scan of the (entire) frequency band by the receiver and to perform comparisons of detected noise to determine the lowest-noise channel, and to use the lowest-noise channel as the new channel. The scan is used to provide and update values of noise in channels across the frequency band. Maintaining this picture of noise across the entire band helps to ensure that the device always transmits in a channel with low background noise. It also helps to avoid transmitting in a used channel. These scans may be performed periodically, since the local broadcast environment is subject to change in levels over time, as well as change as the vehicle moves with respect to external transmitters.

Anomalous results in such a scan could be caused by, for example, harmonics of the current transmit frequency channel being present in a scanned frequency channel. Therefore, the control circuitry is preferably operable to change the transmit power at the end of scanning the frequency band. If these changes in transmit power are seen to correlate with the noise detected in a scanned frequency channel then this channel may be identified by the control circuitry as containing a harmonic of the current transmit channel.

Having scanned the entire frequency band, perhaps a plurality of times, the control circuitry may identify a new channel which is for some reason preferable to the current transmission channel. The selection of a new transmission channel may be based on a number of criteria, for example, a channel may be chosen in which consistently low noise detections are recorded or in which noise detections are below a certain threshold value in a high proportion of detections. In an exemplary embodiment, the control circuitry is operable to perform comparisons of detected noise in low-noise channels to determine a lowest noise channel and to use the lowest noise channel as the new channel. Preferably, the comparisons are based on a rolling mean algorithm of noise detected in each channel over a plurality of scans. Having chosen a new channel, the control circuitry may then begin a frequency handover.

A number of configurations of components may be employed in a device embodying the present invention, for example, the two transmitters and one receiver may be provided as separate components. In an exemplary embodiment, the two transmitters and one receiver are provided as a transceiver and a transmitter with the transceiver acting as the second transmitter and as the receiver. This configuration may simplify some of the functions of the control circuitry. It may also be advantageous in terms of power management.

On frequency handover, the user may need to re-tune the in-vehicle audio to the new frequency (perhaps after an alert signal is produced by the device). Alternatively, the device may provide the vehicle audio with information allowing recognition of the device's transmission and thus automatic re-tuning to any new frequency channel. Alternatively, the in-vehicle audio system may recognise transmission by the device due to its inherent characteristics and automatically re-tune to any new frequency/channel or there may be automatic re-tuning of the in-vehicle audio system in the new device.

Radio transmitters and their associated control circuitry are able to encode a radio signal with additional information. This information may for example, provide details of a program type or it may be a signal used in transmitting stereo broadcast details. In an embodiment of the present invention the control circuitry is operable to provide an identifier identifying the device and a device name for display on the in-vehicle audio system to transmitters. The transmitters are operable to transmit this information to the in-vehicle audio system during operation of the device. Preferably, this information is provided according to RDS standard. Alternatives include the American RBDS system. Therefore, the control circuitry may be operable to implement RDS (or equivalent) functionality so that the device is recognised by the in-vehicle audio system as a radio station. This transfer of additional information is particularly useful in changing transmission channels in a way that is seamless to the user. In RDS, the identifier is known as a PI (Programme Identifier) code. In a device embodying the present invention, this element of the RDS data will identify the device as a programme. When the signal of the programme to which the in-vehicle audio system is tuned worsens, it can scan the frequency band to find any channels to find a better signal having the same PI code, or regular scans can be carried out. In the case of the present invention, that better signal may be present due to there being two transmitters in a dual transmission phase.

In a set-up phase of the device an initial transmit channel is chosen. This channel could be chosen as, for example, the first channel encountered in a scan of the frequency band with a noise detected below a certain threshold value. In an embodiment of the present invention the device is operable in a set up phase to automatically recall and transmit temporarily on the most recently used channel. This may involve the control circuitry performing a check of whether the channel is still free to broadcast on. During temporary channel transmission the device is operable in a set up phase to automatically locate and transmit on the quietest channel in the operating frequency band. This may involve a frequency scan of the entire band. Transmitting on the most recently used channel whilst scanning for the current quietest channel allows the device to begin transmission without having to wait for the results of a full frequency scan.

A range of events could trigger the control circuitry to begin transmission, for example, a wireless signal received from a wireless source by infrared or Bluetooth. In an exemplary embodiment the control circuitry is operable to enable transmission when the sound input circuitry provides an electrical signal over an enabling threshold. This may be caused by a sustained input from any input source. The device may further comprise a manual activation switch operable by the user to enable transmission. Even if the device is not transmitting at a given time, it may still be scanning for low-noise channels. Therefore, when transmission is enabled, there may be a channel already selected to transmit on.

A variety of sources could provide a sound signal to the sound input circuitry for example, a GPS system, a DAB digital radio, or personal music playback apparatus. Some form of continued signal received from one or more of these, or any other connected device, may be used to trigger the control circuitry to enable transmission of a radio signal corresponding to the input sound signal. In an exemplary embodiment the sound input circuitry includes a connection to a microphone for an input sound source and/or a connection to a socket for a wired source. The device may also include a microphone to convert input sound into a sound signal and to provide the sound signal to the sound input circuitry.

Wireless input sources may also be provided so that the device can receive a sound signal, or other information, sent wirelessly. These wireless input sources could be for example, infra-red or Bluetooth inputs. The device may further comprise a Bluetooth receiver to receive a Bluetooth signal from a wireless source. The sound input circuitry may include a Bluetooth connection to provide a sound signal derived from the received Bluetooth signal to the sound input circuitry.

The radio signal transmitted from the device will correspond to the signal received from one of the input sources. In the case of an input signal from more than one source being received concurrently, a switch operated by the user could be used to select which input source the transmitted radio signal should correspond to. In an exemplary embodiment wherein connections to two sources are provided, the sources have different priority levels and the control circuitry is operable to switch automatically from transmitting a radio signal corresponding to the lower priority source to transmitting a radio signal corresponding to the higher priority source when the higher priority source becomes active. The control circuitry may also be (automatically) operable to switch back to transmitting from the lower priority source once the higher priority source becomes inactive. In one exemplary embodiment a higher priority source is a microphone which, in use, receives sound input from a mobile telephone.

In addition to the connection to input sources to provide a sound signal to the device, there may also be a mechanical connection provided. In one exemplary embodiment the device includes a mechanical clip operable to attach the device to a telephone handset so that the microphone is positioned adjacent to the speaker of the handset. This mechanical clip may be sprung or it may be some other form of connection. The clip positions the microphone to receive sound from the telephone speaker. The device may also be provided with a noise-reduction attachment for positioning adjacent to the speaker of the handset. For example a suction cup may be provided. In one embodiment the device further comprises mechanical attachment means for securely positioning the device within the vehicle or on the user. The radio signal transmitted by the device can then correspond to the sound received by the microphone from the telephone speaker. The use of a microphone and/or clip arrangement to couple the device to the telephone handset obviates the need for connectors, such as wired connectors specific to each manufacturer of telephone handsets. The device is therefore compatible with a much greater proportion of telephone handset models than would be achievable if a wired connection to the handset were required.

In one embodiment the transmitters are matched so that by default they transmit substantially the same signal but in different channels.

A device embodying the present invention may be a standalone unit containing some combination of the features listed herein. However, the device may also be provided as part of some other apparatus for example, a GPS system, a DAB digital radio receiver or a personal music playback apparatus. An exemplary embodiment is a mobile telephone comprising a device as described herein. Such a mobile telephone may further comprise personal music playback apparatus.

A further embodiment is a method for changing the radio transmission channel of a radio signal derived from an input sound signal to an in-vehicle audio system including:
gradually reducing the transmission power of a first transmitter transmitting the radio signal in a current channel from an upper operating level to a lower operating level whilst gradually increasing the transmission power of a second transmitter transmitting the radio signal in a new channel from a lower operating level to an upper operating level; wherein the first transmitter is disabled when the second transmitter reaches the upper operating level of the transmission power.

Preferred features of the present invention will now be described, purely by way of example, with reference to the accompanying drawings, in which:-
Figure 1 is a schematic diagram showing the major components of a device embodying the present invention;
Figure 2 is a schematic diagram of an acoustic coupled device embodying the present invention;
Figure 3 shows another embodiment of the present invention;
Figure 4 shows another embodiment of the present invention;
Figure 5 is a flowchart illustrating the main flow of control and functionality of a device embodying the present invention;
Figure 6 is a flowchart illustrating the control of functions carried out by the device when the microcontroller calls the timer interrupt code;
Figure 7A shows an embodiment of the device comprising a clip for attachment to a mobile telephone handset; and
Figure 7B is a schematic illustration of the exterior of a device embodying the present invention.

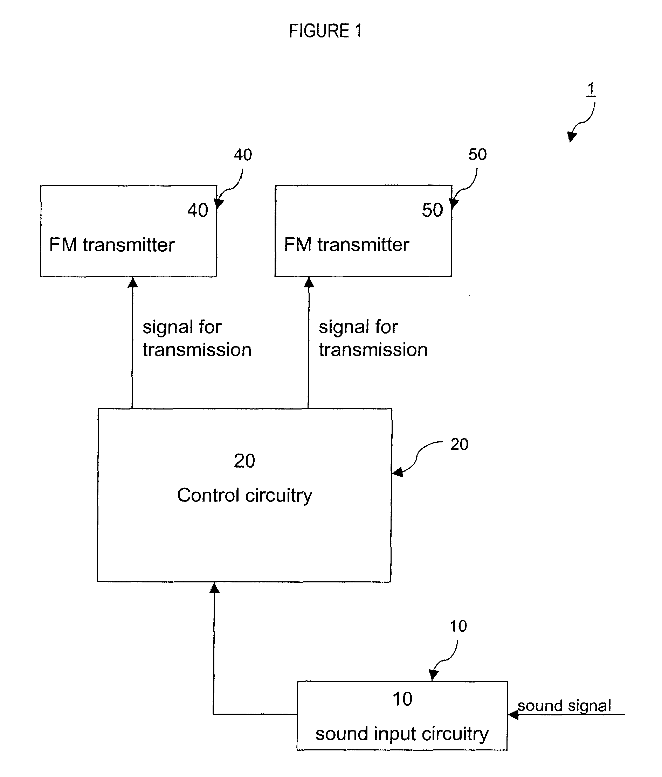

Figure 1 is a schematic diagram showing the major components of a device 1 embodying the present invention. The device 1 comprises sound input circuitry 10, control circuitry 20, and two FM transmitters 40.

The control circuitry is connected to the sound input circuitry to receive a sound signal. The control circuitry is also provided with an electrical connection to send a signal for transmission to a first and/or second FM transmitter.

The control circuitry 20 may include a microcontroller, volatile and non-volatile memory, and an analogue to digital converter. The sound input circuitry 10 may consist of wiring, but may also comprise amplification means, switches such as a multiplexer, or a digital potentiometer. One or each of the transmitters 40 may be in the form of a printed control board (PCB), and may comprise a transmit aerial.

The sound input circuitry is operable to receive a sound signal. The sound input circuitry may modify the sound signal in some way, such as through volume control, amplification, or muting, or may leave the sound signal unmodified. The sound input circuitry is also operable to provide the sound signal, in its modified or unmodified form, to the control circuitry. The control circuitry is operable to perform frequency modulation of the sound signal so that it may be provided as a signal for transmission to one or each of the transmitters via an electrical connection. The control circuitry is also operable to send control data to the transmitters to control parameters such as the transmission power and the frequency channel. Hence the control circuitry is operable to change radio transmission channel by performing a frequency handover including changing from transmitting the radio signal from a first transmitter in a current channel to transmitting the radio signal from a second transmitter in a new channel.

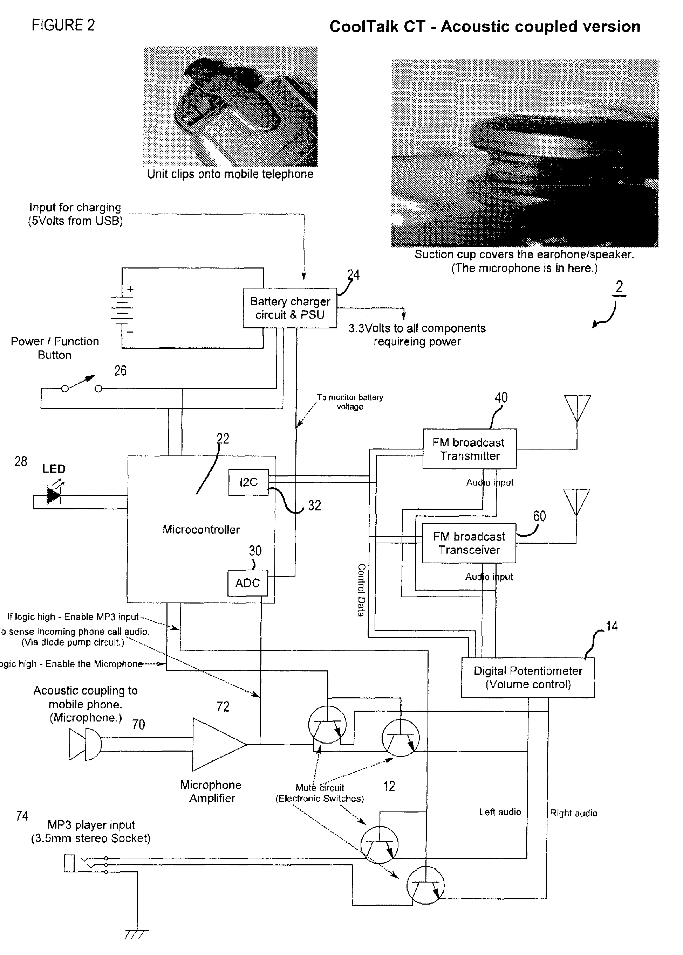

Figure 2 is a schematic diagram of an acoustic coupled device 2 embodying the present invention. The device 2 comprises sound input circuitry 10 including electronic switches 12 which act as a mute circuit, a digital potentiometer 14 for volume control which is directly connected to the transmitters discussed below, and connections to a microphone 70 (via an amplifier 72) and to a 3.5 mm stereo socket 74 (for connection to personal music playback apparatus, or MP3 player). The device further comprises control circuitry 20 including a microcontroller 22, an analogue-to-digital converter 30, a battery charger circuit and PSU 24, a power/function user input button 26, an LED 28 and I2C bus interface 32. This embodiment also comprises two transmitters and a receiver in the form of a transmitter 40, and a transceiver 60.

The mute circuit switches 12 are provided so that either of the input sources may be accepted by the sound input circuitry 10 and provided to the control circuitry 20, and either of the input sources may effectively be blocked. The mute circuit switches 12 are connected to the control circuitry 20 so that they can accept switch position instructions from the microcontroller 22.

The control circuitry 20 may also include a digital potentiometer 14 operable to act as a volume control to regulate the level of the sound signal provided as an audio input to the control circuitry 20. The digital potentiometer 14 may be realised by a variable resistor or equivalent arrangement. The potentiometer 14 is connected to receive a sound signal from any of the sound input sources, and then to provide the sound signal to the control circuitry and transmitters. The potentiometer 14 is connected to receive control data from the microcontroller.

The microcontroller 22 may be a Microchip PIC18F252I/SP microcontroller. The microcontroller 22 is operable to process all data, control all functions, and should have the intelligence to synchronise all activities.

The battery charger circuit and Power Supply Unit (PSU) 24 is operable to receive a 5 Volt DC input for charging via a USB connection, and supplies power to all components requiring it at 3.3 Volts. Receiving input in this way aims to ensure compatibility with many of the USB charging adapters for cigarette lighters found in motor vehicles. In this embodiment the battery is provided as an in built lithium-ion battery which is charged by the battery charger circuit 24 whenever input power is present. The battery charger circuit and PSU 24 may be connected to the user input button 26 so that the user may power up/down the device from a single press of the button 26. The battery charger circuit and PSU 24 is connected to the microcontroller 22 so that battery life can be monitored, and a warning displayed either in the form of a flashing LED 28, or a message on the display of the in-vehicle audio system.

The microcontroller 22 includes an analogue-to-digital converter (ADC) 30 operable to take an analogue sound signal as input, and to generate a digital signal as output. The ADC 30 is connected to any acoustic sound input sources so that it may accept an analogue sound signal from, e.g. a microphone 70. The ADC 30 is also connected to the battery charger circuit and PSU 24 so that it is operable to monitor battery status by analogue to digital conversion. The microcontroller is connected to the sound input circuitry 20 and potentiometer 14 so that it may control any switching between audio sources or muting for a power saving in a case where no input signal is received and ensure that the switches are smooth, i.e. that one source is faded out and the other is faded in.

The microcontroller 22 also includes an inter-integrated circuit (I2C) interface part 32, used to communicate with peripherals such as radio transmitters or receivers.

In one embodiment, the two transmitters and one receiver are provided as a transmitter 40 and a transceiver 60. The transceiver 60 may be an FM transceiver such as the Si4721 manufactured by Silicon Labs, the control circuitry of which is operable to perform RDS encode and decode. The transmitter 40 may be an FM transmitter such as the Si4711, also manufactured by Silicon Labs, and with control circuitry operable to perform RDS encode.

The transceiver 60 and transmitter 40 are connected to the I2C interface 32 so that they may receive data from, and supply data to, the microcontroller 22. The transceiver 60 and transmitter 40 also have connections to the control circuitry 20 so that they can be supplied with a signal for transmission corresponding to an input source. The signal for transmission may be provided as left and right audio signals to enable transmission of a radio signal in stereo.

Input sources are provided by an acoustic coupling (microphone) 70 which can be attached to a mobile phone speaker, and a 3.5 mm stereo socket 74 to accept input from audio equipment including personal music playback apparatus such as an MP3 player. Both input sources are connected to sound input circuitry 10, so that the control circuitry 20 is operable to instruct the mute circuit switches 12 to either accept or block input from a respective source.

The microphone 70 may also be connected to a microphone amplifier 72 operable to increase the power of the received sound signal. The sound signal received from the microphone 70 may also be supplied to the ADC 30 for conversion.

All input sources may be monitored via a diode pump arrangement, and the measurements fed to the microcontroller 22. This enables the microcontroller 22 to send appropriate signals to the mute circuit switches 12 when for example a phone call begins and a sound signal is therefore received by the microphone 70.

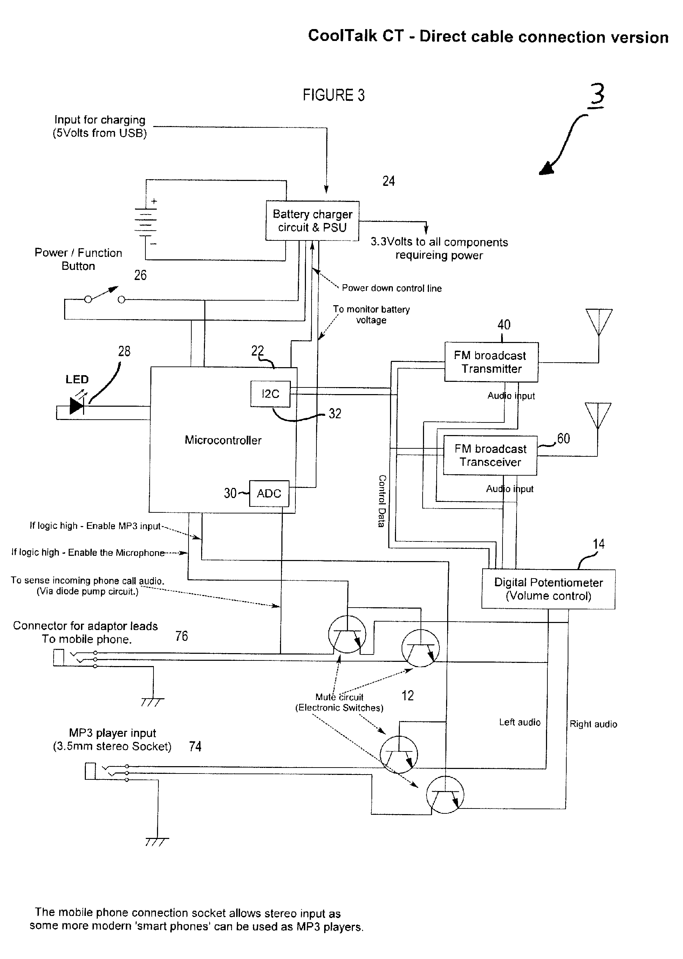

Figure 3 shows another embodiment of the present invention. In this embodiment reference numerals common to other embodiments denote common parts, hence a detailed description of some parts will be omitted from the discussion of this embodiment.

Figure 3 is a schematic diagram of another device 3 embodying the present invention. The device 3 comprises sound input circuitry 10 including electronic switches 12 which act as a mute circuit and connections to a connector 76 for adapter leads to a phone and to a 3.5 mm stereo socket 74 (for connection to personal music playback apparatus, or MP3 player). The device further comprises control circuitry 20 including a microcontroller 22, a digital potentiometer 14 for volume control, an analogue-to-digital converter 30, a battery charger circuit and PSU 24, a power/function user input button 26, an LED 28 and an inter-integrated circuit (I2C) interface part 32. This embodiment also comprises two transmitters and a receiver in the form of a transmitter 40, and a transceiver 60.

The connector 76 may be a plug socket shaped to accept a plug of an output lead from a mobile telephone handset. The shape of this plug socket will be dependent on the manufacturer of the mobile telephone handset to which connection is desired.

Alternatively, the connector 76 may be a USB or mini-USB socket. Any mobile telephone handsets operable to transmit audio output via a cable with a USB or mini-USB connection could then be used with the connector 76.

The connector 76 is operable to connect to leads linking directly to a mobile telephone handset so that sound input may be provided to the sound input circuitry 10 corresponding to the output sound signal from the handset. The connector 76 is connected to the sound input circuitry 10 so that a received sound signal may be accepted or blocked by the mute circuit switches 12. The connector 76 is also connected to the ADC 30 via a diode pump arrangement so that the level of sound signal received may be monitored by the microcontroller 22. This diode pump circuit is operable to charge a capacitor to provide a DC Voltage to the microcontroller proportional to the audio intensity received by the connected input source. The ADC is operable to sample this voltage, and hence to sense the sound intensity of the input source connected to the diode pump. In one embodiment this voltage will provide a measure of the sound intensity from the ringer/conversation speaker of the mobile telephone handset to which the microphone 70 is attached.

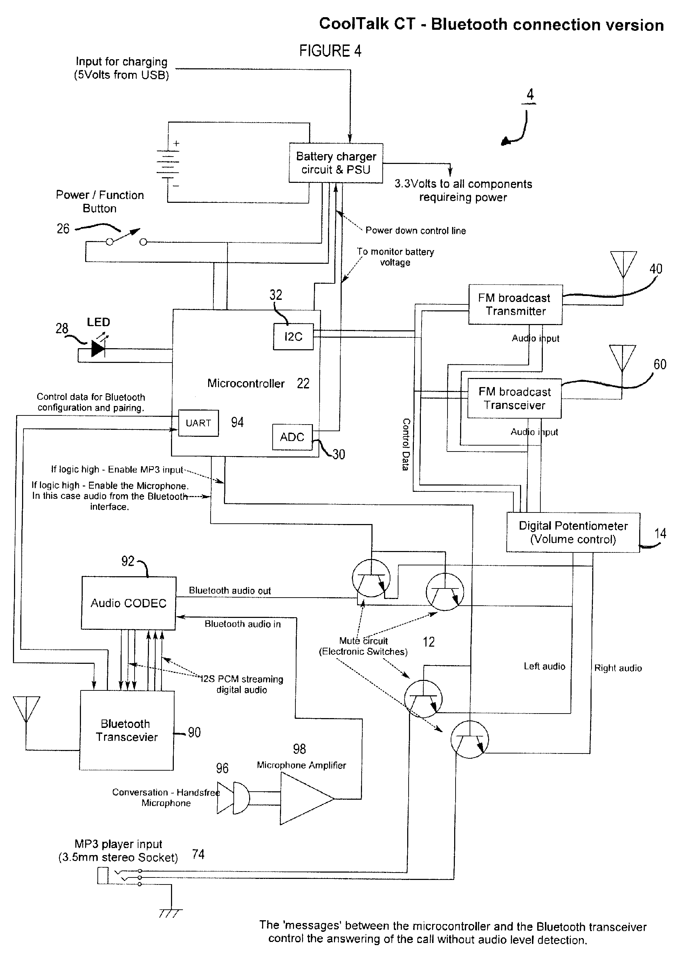

Figure 4 shows another embodiment of the present invention. In this embodiment reference numerals common to other embodiments denote common parts, hence a detailed description of some parts will be omitted from the discussion of this embodiment.

Figure 4 is a schematic diagram of a device 4 embodying the present invention. The device 4 comprises sound input circuitry 10 including mute circuit electronic switches 12, Bluetooth transceiver 90 and Bluetooth audio CODEC (coder/decoder) 92, hands-free microphone 96 and hands-free microphone amplifier 98. The 3.5 mm stereo socket 74 provides input sound data in the same manner as in previous embodiments. The device further comprises control circuitry including a universal asynchronous receiver/transmitter (UART) 94, a microcontroller 22, a digital potentiometer 14 for volume control, an analogue-to-digital converter 30, a battery charger circuit and PSU 24, a power/function user input button 26, an LED 28 and an inter-integrated circuit (I2C) interface part 32. This embodiment also comprises two transmitters and a receiver in the form of a transmitter 40, and a transceiver 60.

In addition to providing a sound signal to the 3.5 mm stereo socket 74 as in other embodiments, input sound may also be provided to the device 4 via the hands-free microphone 96 or the Bluetooth transceiver 90. The Bluetooth transceiver may accept a sound signal transmitted from a mobile telephone handset or other apparatus using the Bluetooth protocol. The Bluetooth transceiver 90 is connected to provide the signal received via the Bluetooth protocol to an audio CODEC 92. The connection between the transceiver 90 and the CODEC 92 may be for example, via an integrated interchip sound (125) serial bus interface used to carry Pulse Code Modulation (PCM) information. The audio CODEC 92 is also connected to the microphone amplifier 98 so that it is operable to accept input sound from the hands-free microphone.
The Bluetooth transceiver 90 is operable to receive a Bluetooth sound signal from a mobile telephone handset. This may contain speech information from a remote user, or other audio information. The Bluetooth transceiver 90 is then operable to send the received Bluetooth sound signal to the audio CODEC 92 for decoding. The audio codec 92 is therefore operable to provide a sound signal to the control circuitry 20 corresponding to the input from the Bluetooth transceiver 90.

The Bluetooth transceiver 90 is also connected to the UART 94 so that control data for Bluetooth configuration and pairing may be transferred between the two. The UART 94 is operable to translate between parallel and serial forms.

The hands-free microphone 96 is operable to accept speech from the user. The hands-free microphone 96 may be attached to the user's head as part of a headset so that the hands-free microphone is close to the user's mouth. The microphone amplifier 98 is operable to amplify the received signal from the microphone, and provide it as an input signal to the audio CODEC 92 for encoding as a Bluetooth signal. The audio CODEC 92 is connected to the Bluetooth transceiver 90 so that the speech encoded as a Bluetooth signal may be provided to the Bluetooth transceiver 90, and the Bluetooth transceiver 90 is operable to transmit the Bluetooth signal to the mobile telephone handset for transmission over the mobile telephone network to the remote caller.

The entire device 4 may be provided as a single unit attached to or including a headset. Alternatively, the device 4 may be provided as a number of interconnected distinct units. For example, the Bluetooth transceiver 90, audio CODEC 92, hands-free microphone 96, and microphone amplifier 98 may form part of a headset with an electrical and data connection to the other components.

The Bluetooth transceiver 90 is also operable to notify the microcontroller 22 of a call in progress (and therefore instruct switching of the mute circuit switches 12) without the need for audio level detection. The microcontroller 22 and the Bluetooth transceiver 90 are operable to control the answering of a call without the need for audio level detection by sending control data between them.

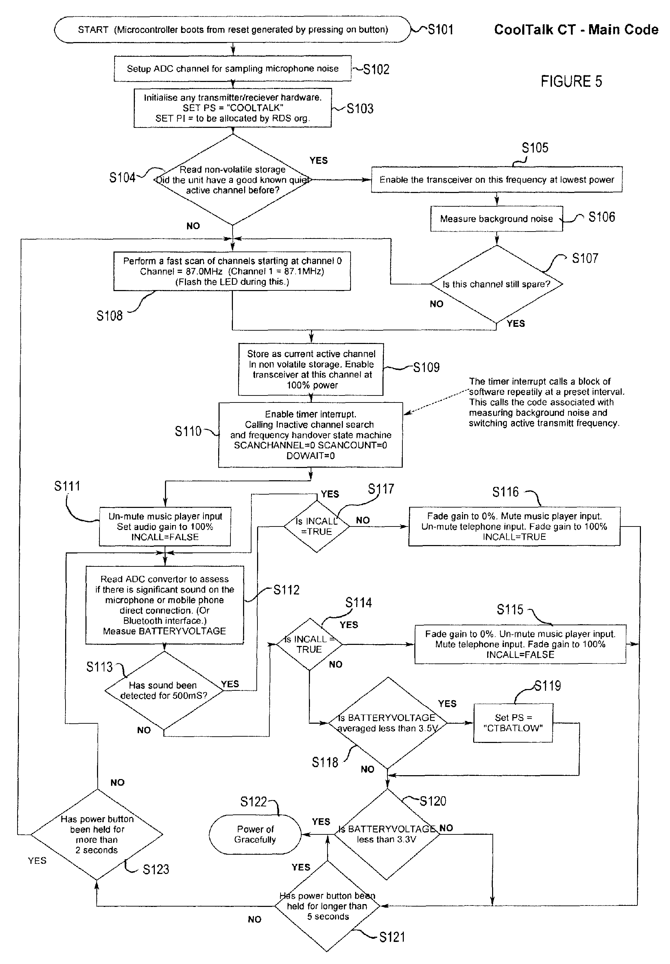

Figure 5 is a flowchart illustrating the main flow of control and functionality of a device embodying the present invention. In one embodiment, the firmware for the microcontroller is written using a CCS 'C' compiler and Microchip MPLAB for programming the firmware.

In step S101 the microcontroller begins its boot up process from a reset initiated by the user pressing the power/function button 26. The user would be likely to initiate the boot up process at the start of a period of use of the device, or at the start of a period in which the device may be in use, such as a journey in a vehicle.

In step S102 the ADC channel for sampling microphone noise is setup. In this way, the device is operable to detect the presence of an input sound source (and therefore to begin transmission) at the earliest opportunity.

In step S103 the transmitter and receiver hardware is initialised and the RDS (or equivalent) information to be encoded onto the signal for transmission is set. Setting the RDS Programme Service (PS) code to "COOLTALK" will enable the user to recognise when their in-vehicle audio system is tuned in to the transmission from the device, as "COOLTALK" will be displayed on the display of the audio system. The control circuitry is operable to instruct a change of PS code throughout the use of the device to transmit for example, battery status messages to the user. The Programme Identifier (PI) code will also be set at this step, but will not change at any stage of the transmission. The specific PI code (or equivalent) will be allocated by the RDS (or equivalent) organisation. Each radio station has a PI code, and it allows RDS enabled tuners to identify transmissions or broadcasts from the same station. In this way, when the signal quality or signal strength of a received broadcast becomes weak or poor, an in-vehicle audio system may scan for other transmissions from the same station, and re-tune accordingly. Once the PS and PI code have been set by the microcontroller 22, they are continuously transmitted by the transmitter 40 and the transmitter part of the transceiver 60.

In a first use of the device with a particular in-vehicle audio system, the user may have to perform a scan of the frequency band on the audio system to locate the channel over which the device is transmitting. The PS code will enable the user to locate the transmission channel of the device. The user may then store this channel as a preset on the in-vehicle audio system. Storing a preset in this way links the preset to a particular RDS PI code so that when the user selects that preset, it will always be able to find the transmission from the device, even if the actual frequency channel has changed.

Following these set up steps, in step S104 the device selects a frequency channel (channel) over which to commence radio signal transmission. The microcontroller is operable to check the non-volatile storage to identify whether the device was transmitting on a quiet channel at the time of the most recent powering down of the device. If the location of such a quiet channel can be retrieved, then in step S105 the control circuitry is operable to enable the transceiver to transmit on this retrieved channel at a lowest power setting. The lowest power may be 10% of the maximum transmit power. The maximum transmit power may vary depending on local regulations, but could be around 50nW (nano Watts). In step S106 the device then measures the background noise on the retrieved channel using the transceiver's receiver. The microcontroller is operable in step S107 to decide whether the retrieved channel is still available to transmit on. This may be based on comparison with a certain threshold value of background noise above which it is considered that there is likely to be another radio station broadcasting on the channel likely to cause interference or to mask the transmission of the device.

If it is considered that the retrieved channel is spare, then (step S109) the retrieved channel is stored in the non-volatile storage as the current active channel. The microcontroller then enables the transceiver to transmit over this channel at maximum transmission power.

If it is considered by the microcontroller that the retrieved channel has too much background noise, then the flow proceeds to step S108, a fast scan of the frequency band.

In the case that no channel information could be retrieved from the non-volatile storage at step S104, the flow also proceeds directly to step S108.

If the flow has proceeded to step S108 in either of the two cases above, the microcontroller has been unable to locate a suitable channel in the non-volatile storage on which to begin transmission. The control circuitry is therefore operable to communicate with the receiver of the transceiver 60 to perform a fast scan of the frequency band. Each channel (in say, 0.1MHz increments) is sampled for approximately 20ms and the microcontroller 22 may identify the channel with the lowest level of background noise to store as the current active channel in step S109. Alternatively, the microcontroller 22 can scan upwards until it locates a channel with a noise level below a preprogrammed threshold level, in which case it would sample that channel say five times to get a mean average to confirm that it is empty. In step S109 the current active channel is enabled to transmit at maximum power. In order to reduce unexpected anomalies such as burst interference in the background noise sampling, the microcontroller 22 is operable to calculate the noise level in each channel using a rolling mean algorithm.

At this point the device is ready to commence its main function of transmitting audio data as a radio signal to the in-vehicle audio system. At step S110 the microcontroller enables the timer interrupt. The timer interrupt is an internal clock in the microcontroller which calls a block of code in a repeatable manner. The timer interrupt code is associated with measuring the background noise and switching to new transmit frequencies.

In step S111 the mute circuit switches are set to allow the sound input circuitry to receive an input sound signal from the 3.5 mm stereo socket. The device can then transmit a radio signal based on this input sound signal over the current active channel to the in-vehicle audio system. The user can then hear the output from their personal music playback apparatus at an easily audible volume using their in-vehicle system. It is assumed at this step that no call is in progress (INCALL = FALSE) on a mobile telephone handset connected to the device.

Steps S112 to S123 represent the main control loop carried out by the microcontroller. These steps are dedicated to sampling input sources for an incoming call, and the adjustment of the muting switches to change between input sources.

From step S111 the flow proceeds directly to step S112. The sound intensity received by the connection to the mobile telephone, whether it be via microphone, Bluetooth, and/or direct connection, is monitored by microcontroller using the ADC 30 and diode pump arrangement. In step S112 the microcontroller is operable to take a reading proportional to this sound intensity level from the ADC 30. At this step the microcontroller is also operable to take a reading of the battery voltage from the ADC 30.

At step S113 the microcontroller is operable to decide whether or not a call is in progress. If the monitoring of the ADC 30 indicates that a significant level of sound intensity has been detected in the last say 500 ms by the sound input source connected to the mobile telephone handset, then the microcontroller carries out steps based on the assumption that a call is in progress, and the flow proceeds directly to step S117.

If, at step S117, the microcontroller is already set to operate the device as though a call is in progress (if INCALL = TRUE), then the mute circuit switches 12 will all be set to the correct positions, and the flow returns to step S112 to continue monitoring the sound intensity received by the input source connected to the mobile telephone handset. If however, the microcontroller had previously been set to operate the device as though no call was in progress (if INCALL=FALSE), then the transmitted radio signal was based on an input source other than the mobile telephone handset. In this case the flow proceeds to step S116, in which the microcontroller is operable to set the mute circuit switches to mute the input from any other source, and un-mute the input from the input source connected to the mobile telephone handset (set INCALL=TRUE), and the flow proceeds to step S121.

If, at step S113 the microcontroller decides that the sound intensity indicated by the signal received from the ADC 30 over the past 500 ms is consistent with there being no call in progress, then the flow proceeds to step S114. If the microcontroller had previously been set to operate as though there was a call in progress, then this most recent indication from the ADC that there is no call in progress is also indicative of the end of the telephone call. Therefore the flow proceeds to step S115 in which the microcontroller is operable to set the mute circuit switches to mute the input from the input source connected to the mobile telephone handset (set INCALL=FALSE), and un-mute the input from any other input source, and the flow proceeds to step S121.

If at step S114 the microcontroller is set to operate as though there is no call in progress, then no changing of the mute circuit switches 12 is required, and the flow proceeds to step S118.

At step S118 the microcontroller 22 is operable to check whether the battery voltage is greater or less than 3.5V, based on an average obtained from the ADC 30. If it is determined that the battery voltage is less than 3.5V the flow moves on to step S119 in which the RDS PS code (or equivalent) is set so that "CTBATLOW" is shown on the in-vehicle audio system display. This may prompt the user to connect the charger to the device at the next opportunity. The flow then proceeds to step S120. If at step S118 it is determined that the battery voltage is greater than 3.5V, then the flow proceeds directly to step S120.

At step S120 the battery voltage is checked in the same way as in step S118. If it is determined that the battery voltage is less than 3.3V, step S122 is carried out, and the microcontroller is operable to instruct a powering down of the device. Embodiments are based on a 3.3V logic system, so control functionality may be inhibited if the battery voltage drops below 3.3V. If at step S120 the battery voltage is found to be greater than 3.3V, the flow proceeds to step S121.

In step S121 the microcontroller 22 is operable to check whether the power/function button 26 has been pressed and held by the user for longer than 5 seconds. If it has, then this indicates the user's desire to turn off the device, and the flow moves to step S122, powering down. If the power/function button 26 has been held for less than 5 seconds, the flow proceeds to step S123. At this step, in the case that the power/function button 26 has either not been pressed, or has been pressed for less than two seconds, the flow returns to step S112 and the process of checking sound input sources and changing the mute circuit switches begins again. If at step S123 it is determined that the power/function button 26 has been held for longer than two seconds, then the flow returns to step S108, and the microcontroller is operable to undertake a fast scan of the frequency band. This repairs the rare condition that the device transmits on a non-clear frequency. This could occur if a pirate broadcast became active on a certain channel for instance.

The main control flow for the device therefore loops from step S108 to step S123 via various possible paths and sub-loops until the device powers down. Following the first iteration of step S110 since starting, the microcontroller 22 will also be calling the block of code associated with the timer interrupt in a repeatable manner.

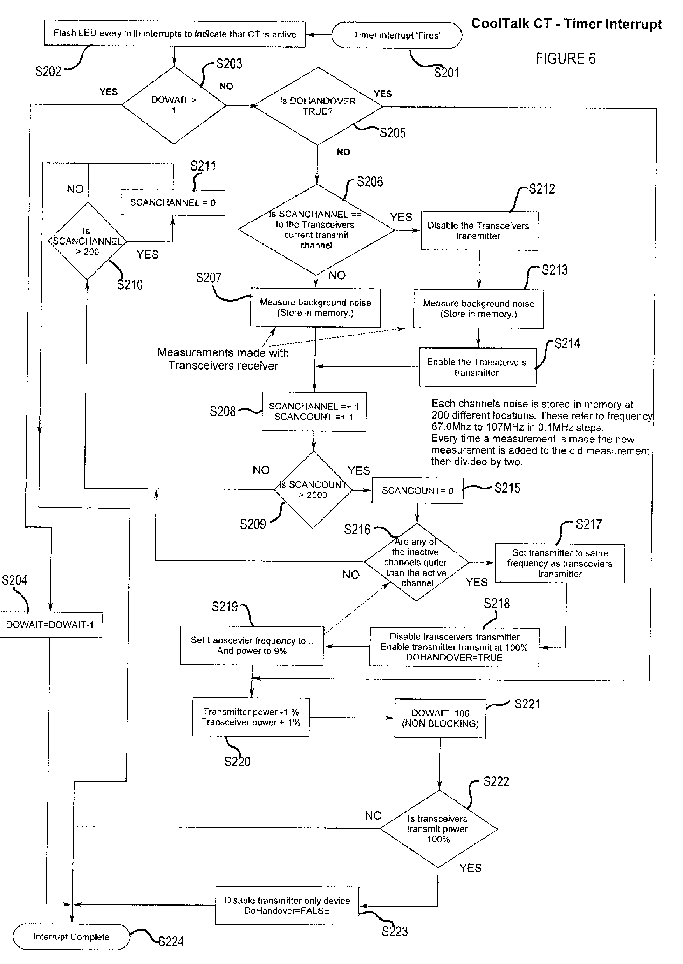

Figure 6 is a flowchart illustrating the control of functions carried out by the device when the microcontroller 22 calls the timer interrupt code. The timer interrupt is an internal clock which fires at predetermined regular time intervals and calls the timer interrupt code.

Step S201 is the firing of the timer interrupt which initiates the timer interrupt code. Once in every predetermined number of interrupts the LED 28 will flash to signal to the user that the device is active (step S202).

At step S203 the microcontroller determines whether the timer interrupt code is in a holding state (is DOWAIT>1?). A holding state can be used to slow down functions associated with the calling of the timer interrupt code. For example, instructions may only need to be carried out every 1 in 100 times the timer interrupt is fired, so carrying out the instruction sets the DOWAIT parameter to 100, and each subsequent firing of the timer interrupt decrements the value of the DOWAIT parameter, until DOWAIT becomes 0, and the instruction may be carried out again. If the value of the DOWAIT parameter is greater than 1, then the code is in a holding state, and the flow proceeds to step S204 which decrements the DOWAIT parameter. The flow then continues to S224 and the timer interrupt is complete.

If the DOWAIT parameter is less than 1 then the flow goes from step S203 to step S205. In this step, it is determined whether the device is currently carrying out the dual transmission phase of a frequency handover by checking the DOHANDOVER parameter. If DOHANDOVER is true, then the flow proceeds to step S220. If at step S205 it is determined that the device is not currently carrying out the dual transmission phase of a frequency handover (DOHANDOVER = FALSE), then the flow proceeds to step S206.

When the timer interrupt code is called it causes the microcontroller to control functions associated with searching for new transmission channels, and handing over between a current and a new transmission channel. A parameter SCANCHANNEL represents a value corresponding to the frequency channel to be scanned in the particular iteration of the timer interrupt code. In step S206 the microcontroller determines whether the value of SCANCHANNEL is equal to the current transmit channel of the transmitter part of the transceiver. As the device scans through the channels, it is only approximately once in every complete scan that the channel corresponding to SCANCHANNEL will be the current transmit channel. If SCANCHANNEL does not correspond the current transmit channel of the transmitter part of the transceiver, then the flow proceeds to step S207.

At step S207, the microcontroller sets (tunes) the receiver part of the transceiver to a channel corresponding to the value of SCANCHANNEL and measures the background noise over a sample period of as short as the software will allow, for example 1-2 mS. In alternative embodiments where more information is required from each sample, this time could be extended to say 20 or 100 mS. A value corresponding to this background noise level is then stored in the memory. The flow then proceeds to step S208.

If, on the other hand, at step S206 it is determined that the current value of the SCANCHANNEL parameter does correspond to the current transmit channel, then the flow proceeds to step S212. Steps S212 to S214 represent the measurement of background noise in the current transmit channel. In step S212 the microcontroller instructs the transceiver that a measurement of the current transmit channel is to be made. The transceiver has a special function for quickly disabling the transmitter (step S212), measuring the background noise of the current channel using the receiver part over a sample period (step S213) similar to that used in step S207, and then quickly enabling transmission by the transmitter part again (step S214). A value corresponding to this background noise level is then stored in the memory. By measuring the background noise of the current transmit channel according to these steps S212 to S214, the transmission of the radio signal is only interrupted for a matter of milliseconds, which will not disrupt a telephone call and should have little effect on the transmission of a music source. The flow then proceeds from step S214 to step S208.

Step S208 increments the parameters SCANCHANNEL and SCANCOUNT by 1. SCANCOUNT is a parameter used to dictate the number of times the entire frequency band should be scanned before the microcontroller determines whether or not to perform a frequency handover. When travelling at say 70 Mph, the status of active and inactive frequency channels may not change significantly over the timescale of a single complete scan. Furthermore, comparisons between channels made over a single scan are subject to erroneous results. Therefore, SCANCOUNT can be set to be say 10 times the total number of channels in the frequency band.

At step S209 the microcontroller checks that the number of scans dictated by SCANCOUNT has not yet been completed. If they have not, then the flow proceeds to step S210. In step S210 the SCANCHANNEL parameter is checked, and if it has a value corresponding to a channel with a frequency higher than the highest frequency in the broadcast frequency band, then at step S211 SCANCHANNEL is reset to zero (corresponding to the minimum frequency of the frequency band) and the flow proceeds to step S224, which completes the timer interrupt. If at step S210 it is determined that SCANCHANNEL is less than the value corresponding to the top of the frequency band, then the flow proceeds to step S224 without resetting the value of SCANCHANNEL.

If the number of scans dictated by SCANCOUNT has been completed, then the flow proceeds to step S215 which resets SCANCOUNT to zero, and on to step S216.

In step S216 the microcontroller determines whether the level of background noise detected on any of the channels other than the current transmit channel, is lower than that of the current transmit channel. Each complete scan of the frequency band contributes, for each channel, a value to the memory representing the background noise sampled on that scan. In one embodiment, each value is used in a rolling mean algorithm. This gives more weight to recent results, and reduces the number of values stored in the memory. A rolling mean algorithm adds the value from each scan to the previous rolling mean for that channel, and divides the result by 2 to obtain a new rolling mean value. The channel with the lowest rolling mean value can be selected as the new transmit channel.

In one embodiment, if any channel has a rolling mean value lower than the current transmit channel, then the flow proceeds to step S217 and a frequency handover begins. If however, no channel is found to be quieter than the current transmit channel, the flow returns to step S210.

In step S217, the microcontroller is operable to set the transmit frequency of the transmitter 40 to the same frequency as the transmitter of the transceiver 60 (the current transmit channel). The flow then proceeds to step S218 and the microcontroller disables the transmitter part of the transceiver, and enables the transmitter 40 to transmit at maximum power. Since the transmitters in this transmitter swap are transmitting on the same frequency channel a channel encoded with the same PI code (or equivalent), it will be seamless to the user. At this point the DOHANDOVER parameter is set to TRUE, so that the next time the timer interrupt fires, it is flagged that the dual transmission phase of a frequency handover is underway, and the steps related to scanning the frequency band and identifying new transmit channels can be omitted. The flow proceeds to step S219.

In step S219 the transmitter part of the transceiver 60 is enable to transmit in the new frequency channel with a transmit power of say 10% of the maximum transmit power. Both transmitters are now transmitting the same radio signal, encoded with the same PI code, but at different transmit powers. The flow proceeds to step S220, in which the transmit power of the transmitter 40 is increased by say 1%, and the transmit power of the transmitter part of the transceiver 60 is reduced by an equal percentage. This effectively mimics a vehicle moving away from one external transmitter and toward another external transmitter transmitting the same programme on a different frequency.

In step S221 the DOWAIT parameter is set to say 100, so that it will take 100 iterations of the timer interrupt firing before the transmit powers change again. This gradual change in the transmit power prevents confusion of the internal logic of the in-vehicle audio system. The flow proceeds to step S222 which checks whether the transmit power of the transmitter part of the transceiver 60 has yet reached maximum transmit power. If it has, then the frequency handover is completed at step S223, the transmitter 40 is disabled, and the DOHANDOVER parameter is set to false so that the next time the timer interrupt fires the frequency scanning steps can be performed.

If at step S222 it is determined that the transmit power of the transmitter part of the transceiver 60 is less than the maximum, the timer interrupt is deemed to be complete. Subsequent firings of the timer interrupt will perform steps S201 - S204 until the DOWAIT parameter reaches 0, at which point step S220 will be carried out and the transmit powers changed. This will continue until the condition at step S222 is satisfied, and the frequency handover deemed complete.

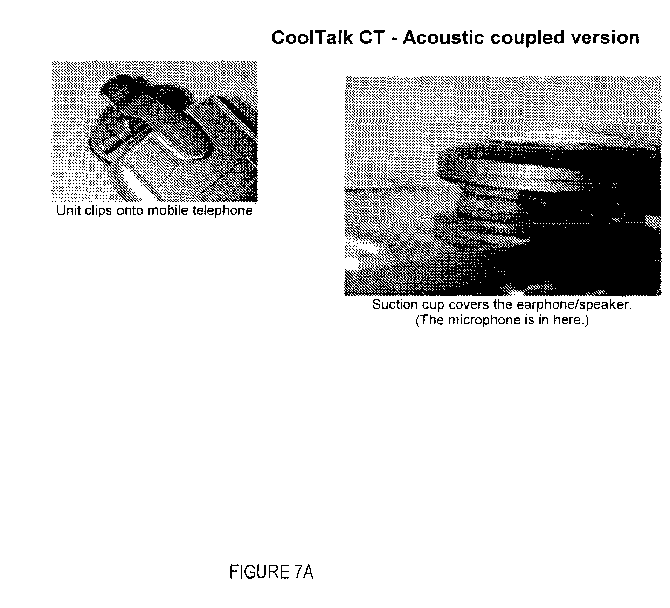

Figure 7A shows an embodiment of the device comprising a clip for attachment to a mobile telephone handset. A suction cup over the handset's speaker may be used to house the device's microphone 70.

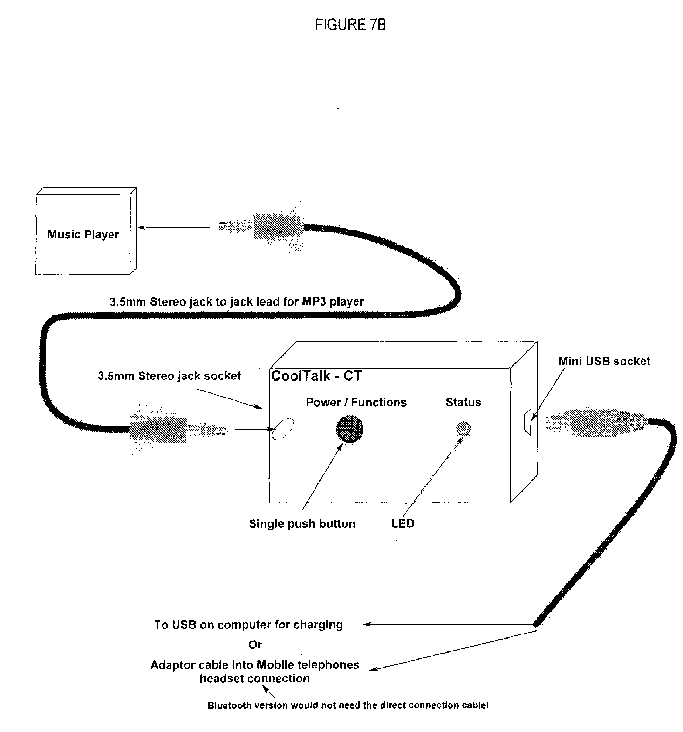

Figure 7B is a schematic illustration of the exterior of a device embodying the present invention. Some examples of possible connections and user interface controls are included.

This embodiment is provided with connections including a 3.5 mm stereo (jack) socket 74, and a mini USB socket 78. User interface is provided by a power/function button 26, and an LED 28.

The 3.5 mm stereo (jack) socket 74 is operable to accept input from audio equipment such as a personal MP3 player.

The mini USB socket 78 may be connected to a USB socket on a computer for charging, or to a USB charger compatible with in-vehicle cigarette lighter sockets. In embodiments of the invention using a handset's direct cable connection to mobile telephone handsets, this connection may be realised via the mini-USB socket 78.

The power function button 26 is operable to trigger certain functionality of the microcontroller 22. For example, depending on the current status of the device and the length of time for which the button is pressed, the device may be powered up or down, or frequency scan operations may be initiated.

The LED 28 is operable to flash on and off at times as instructed by the microcontroller 22 to communicate to the user that the device is active.

The skilled reader will appreciate that the embodiments are given as examples only and that the parts and functions described can be combined or separated into different components as necessary.

The functions described can be provided as one or more of software, firmware and hardware as appropriate in any combination.

Thus, in any of the above aspects, the various features may be implemented in hardware, or as software/firmware modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A device for transmitting a sound signal received from a source to an in-vehicle audio system, the device comprising:
sound input circuitry operable to receive a sound signal;
control circuitry operable to convert the sound signal to a signal for transmission; and
two transmitters both operable to transmit the signal for transmission to the in-vehicle audio system in a radio transmission channel; wherein
the control circuitry is also operable to change radio transmission channel by performing a frequency handover including changing from transmitting the signal for transmission from a first transmitter in a current channel to transmitting the signal for transmission from a second transmitter in a new channel.

2. A device according to claim 1, wherein
the frequency handover includes a dual-transmission phase in which the first transmitter transmits the radio signal in the current channel whilst the second transmitter simultaneously transmits the radio signal in the new channel.

3. A device according to claim 2, wherein during the dual-transmission phase
a transmission parameter of the transmission from the first transmitter is gradually reduced whilst a transmission parameter of the transmission from the second transmitter is gradually increased; and wherein preferably
the transmission parameter reduction and increase are at the same rate, so that the frequency handover mimics the effect of a vehicle's movement away from one transmitter external to the vehicle towards another transmitter external to the vehicle.

4. A device according to any of the preceding claims, wherein the control circuitry is operable to include an initial transmitter swap in the frequency handover, in which:
existing transmission of the radio signal by the second transmitter in the current channel is disabled; and
swapped transmission by the first transmitter in the current channel is enabled.

5. A device according to any of the preceding claims, further comprising a receiver, wherein the control circuitry is operable to scan a frequency band, measure noise in each channel of the frequency band, and
to change radio transmission channel based on the noise detected by the receiver; and wherein
the control circuitry is operable to change the transmit power at the end of scanning a frequency band.

6. A device according to claim 5, wherein the two transmitters and one receiver are provided as a transceiver and a transmitter, with the transceiver acting as the second transmitter.

7. A device according to any of the preceding claims, wherein the control circuitry is operable to provide recognition information, such as an identifier identifying the device and a device name for display on the in-vehicle audio system to the transmitters and wherein the transmitters are operable to transmit this information to the in-vehicle audio system during operation of the device, so that the device is recognised by the in-vehicle audio system as a radio station.

8. A device according to any of the preceding claims, wherein the device is operable in a set-up phase to automatically recall the most recently used channel, and to transmit temporarily therein; or to automatically locate and transmit on the quietest channel in the operating frequency band.

9. A device according to any of the preceding claims, wherein the control circuitry is operable to enable transmission when the sound input circuitry provides an electrical signal over an enabling threshold.

10. A device according to any of the preceding claims, wherein the device includes a microphone to convert input sound into a sound signal, and to provide the sound signal to the sound input circuitry, and wherein the microphone is preferably operable to receive sound input from a mobile telephone; and
wherein the sound input circuitry includes a connection to a microphone for an input sound source and/or a connection to a socket for a wired source.

11. A device according to any of the preceding claims, further comprising a Bluetooth receiver to receive a Bluetooth signal from a wireless source; wherein
the sound input circuitry includes a Bluetooth connection to provide a sound signal derived from the received Bluetooth signal to the sound input circuitry.

12. A device according to any of the preceding claims, wherein
connections to two sources are provided;
the sources have different priority levels; and
the control circuitry is operable to control a switch from transmitting a radio signal corresponding to the lower priority source to transmitting a radio signal corresponding to the higher priority source when the higher priority source becomes active; and optionally wherein
the control circuitry is operable to switch back to transmitting from the lower priority source once the higher priority source becomes inactive.

13. A device according to any of the preceding claims, further comprising mechanical attachment means for securely positioning the device within the vehicle or on the user, and/or a mechanical clip operable to attach the device to a telephone handset so that the microphone is positioned adjacent to the speaker of the handset.

14. A mobile telephone comprising a device according to any of the preceding claims.

15. A method for changing the radio transmission channel of a radio signal derived from an input sound signal to an in-vehicle audio system including:
gradually reducing the transmission power of a first transmitter transmitting the radio signal in a current channel from an upper operating level to a lower operating level; whilst
gradually increasing the transmission power of a second transmitter transmitting the radio signal in a new channel from a lower operating level to an upper operating level; wherein
upon reaching the upper operating level of the transmission power of the second transmitter the first transmitter is disabled.
